(19)

Europäisches Patentamt
European Patent Office
Office européen des brevets

(11) **EP 2 639 858 A1**

(12) **EUROPEAN PATENT APPLICATION**

(43) Date of publication:
**18.09.2013 Bulletin 2013/38**

(51) Int Cl.:
***H01M 2/20*** *(2006.01)*

(21) Application number: **13156266.2**

(22) Date of filing: **22.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.03.2012 JP 2012056667**

(71) Applicant: **Hitachi Ltd.**
**Tokyo 100-8280 (JP)**

(72) Inventors:
• **YAMAUCHI, Shin**
**Tokyo, 100-8220 (JP)**
• **TANAKA, Toru**
**Tokyo, 100-8220 (JP)**
• **URANO, Shinichi**
**Tokyo, 100-8220 (JP)**

(74) Representative: **MERH-IP**
**Matias Erny Reichl Hoffmann**
**Paul-Heyse-Strasse 29**
**80336 München (DE)**

(54) **Battery system**

(57)    A battery system that is compact and lightweight and capable of reducing the effects of induction components even when the wiring length connecting between plural battery elements has become long. A battery module (213) contains multiple battery cells (217-11 through 16) formed into cuboid shapes and connected each of the battery cells. The bus bars (W11, W12) (first current flow path) that electrically connect the battery cells (217-11 through 13) in series, and the bus bars (W14, W15) (second current flow path) that electrically connect the battery cells (217-14 through 16) in series are respectively installed so as to maintain a mutual specified gap. The electrical current flow directions in the bus bars (W11, W12) and the bus bars (W14, W15) are set in mutually different directions at an inverter unit (R1) configured from a positive terminal (Tp14), a negative terminal (Tn13), and a bus bar (W13).

FIG.3A

**Description**

Technical Field

The present invention relates to a battery system configured from multiple battery elements connected by wiring.

Background

In recent years, power systems (systems integrating power generation, power transforming, power transmission, and distribution) are being provided that utilize so-called renewable energy derived from natural energy such as wind power and solar power generation. Though power systems utilizing renewable energy have the advantage that the load on the natural environment is low, there is also the disadvantage that the capability to generate power is dominated by the natural environment. More specifically, the intensity of wind power and sunlight is subject to occasional or constant change so that the adverse effects that fluctuations in frequency or fluctuations in voltage might exert on the power system are a source of concern.

One approach to eliminating this source of concern is the steady and sure progress made in recent years in developing battery systems for electrical power storage and experimental use in power systems.

There are battery systems known in the related art for example where multiple battery cells are connected together in either series or parallel, or a combination of series and parallel connections (See for example the patent literature 1). In the battery system in the patent literature 1, the plural battery cells include a positive terminal and a negative terminal and are respectively coupled to an input circuit and an output circuit by way of these terminals and wiring.

The Japanese Unexamined Patent Application Publication No. 2010-92841 can provide integrated power source batteries configured from three-dimensionally mutually connected cells.

Summary

However, when using for example the battery system of patent literature 1 for power storage applications, demands may occur to expand (higher- voltage or larger- capacity) the scale of the battery system. Expanding the capacity of the battery system results in considerably long wiring order to connect between the plural power cells needed to expand the system scale. The inductance component occurring in this wiring also becomes considerably large along with the greater wire length. Battery systems in particular connected to inverter circuits utilizing switching elements have the problem that the inductance component occurring in the wiring causes ripple that occurs in the output voltage waveform.

One method considered to eliminate effects from inductance components occurring in the wiring in the battery systems connected to inverter circuits using switching elements was inserting a condenser between the output side and the ground side.

However eliminating the effects of from large inductance components requires using a condenser with a large capacity to match that inductance. Eliminating the inductance in this way requires making the size of inverter circuit larger so that the size and weight of the overall system also becomes larger. The battery system in patent literature 1 does not deal with the point of eliminating effects from the inductance component generated in the wiring.

In view of the aforementioned problem with the related art, the present invention has the object of providing a compact and lightweight battery system capable of lessening the effect of the inductance component even in cases where the wire length connections between plural battery elements have become long.

In order to achieve the aforesaid objective, the battery system of the present invention is connected to plural battery elements including a positive terminal and a negative terminal, and the system further includes multiple wires to respectively conduct electricity between a positive terminal on battery element on one side, and a negative terminal on a battery element on the side among a pair of battery elements that are objects for connection; and the plurality of wires respectively include a first current flow path and a second current flow path, and the first and second current flow path are respectively positioned to maintain a roughly specified mutual gap, and the flow of electrical current on the first and the second electrical current flow paths is set in mutually opposite directions which is the most important feature.

The battery system of the present invention is capable of providing a compact and lightweight battery system to lessen the effect of the inductance component even in cases where the wire length connecting between plural battery elements has become long.

Brief Description of Drawings

Fig. 1 is a block diagram showing an overview of the power system in which the battery system of the present invention is utilized;

Fig. 2 is a block diagram for conceptually expressing the layered structure of the battery system of the present invention;

Fig. 3A (a) is a drawing showing a transparent view from the side surface of an internal section of the battery module equivalent to the battery system of the first embodiment of the present invention, and Fig.3A (b) is a drawing showing a transparent view from the backside of an internal section of the battery module;

Fig. 3B is a wiring illustration for conceptually expressing the internal structure of the battery module;

Fig. 4A is an external perspective view showing the battery pack equivalent to the battery system of the second embodiment of the present invention;

Fig. 4B is an external perspective view of the battery module serving as a structural element of the battery pack;

Fig. 4C is a frontal view of the battery module;

Fig. 4D is an external perspective view showing the state where a pair of battery modules is connected by way of wiring;

Fig. 4E is a drawing showing from above, the connection state between the pair of battery modules in Fig. 4D; and

Fig. 4F is a wiring illustration for conceptually expressing the internal structure of the battery pack.

Detailed Description

The battery systems of the first and the second embodiments of the present invention are described next while referring to the drawings.

[Overview of power system incorporating the battery system of the present invention]

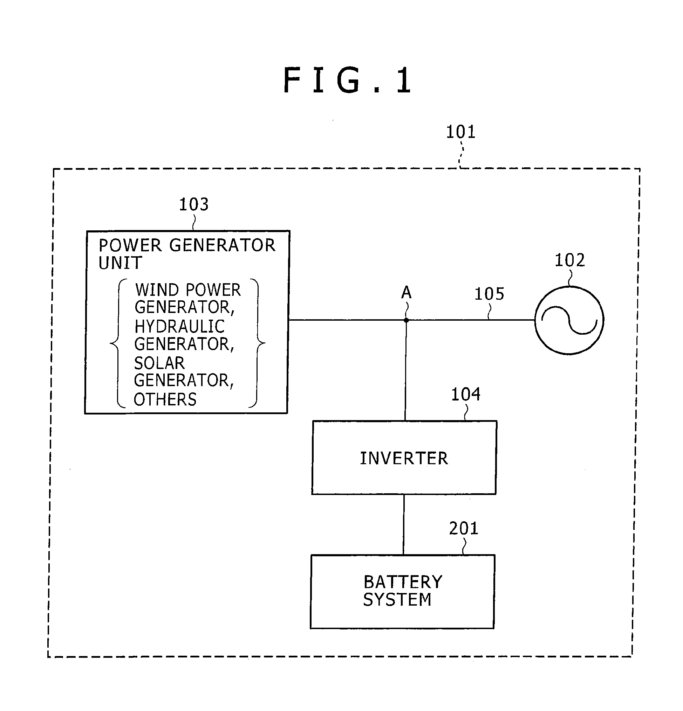

An overview of the power system incorporating the battery system (battery system of the first and second embodiment) of the present invention is first of all described while referring to Fig. 1. Fig. 1 is a block diagram showing an overview of the power system 101 where the battery system 201 of the present invention is utilized.

Electrical power systems derived from natural energy such as wind power and solar power have the advantage that the load placed on the natural environment is low, yet these power systems also have the disadvantage that the capability to generate power is dominated by the natural environment. More specifically, the intensity of wind power and sunlight is occasionally or constantly subject to change so that adverse effects which fluctuations in frequency or fluctuations in voltage might exert on the power system are a source of concern.

An approach for eliminating this source of concern as shown in Fig. 1 is a proposal for the joint construction of battery systems in natural energy power generating equipment, and suppressing the frequency fluctuations and voltage fluctuations in the power system 101.

The power system 101 as shown in Fig. 1 is comprised of an electrical power system 102, a power generator unit 103, an inverter 104, and the battery system 201 of the present invention.

The battery system 201 of the present invention is a concept including the battery systems relating to the first and second embodiments described later on.

The power generator unit 103 includes for example a function to supply generated electrical power derived from natural energy to the electrical power system 102. The battery system 201 of the present invention is connected by way of a link point A and an inverter 104 to the electric wire 105 connecting to the power generator unit 103 and electrical power system 102.

The inverter 104 includes a function to convert the power generated by the power generator unit 103 into direct current (DC) power and send the converted DC power to the battery system 102, and convert the stored DC power in the battery system 201 into alternating current (AC) power, and send the converted AC power to the electrical power system 102. Power is transmitted to the load by way of the AC electrical power system 102.

If utilizing a natural energy generator device 103 as the power generator unit 103, the output might fluctuate due to effects sustained from variations in the natural environment such as the weather or the season, etc. These output fluctuations lead to frequency fluctuations and voltage fluctuations in the battery system 102, and cause a drop in electrical power quality in the electrical power system 102.

In this point, the battery system 201 of the present invention functions to maintain fluctuations in frequency and voltage in the electrical power system 102 within a specified range. Namely, the battery system 201 includes a so-called buffer function to charge excess power into the battery system 201 when excess power is supplied to the electrical power system 102; and also to discharge the stored electrical power from the battery system 201 when the supplied electrical power is insufficient. The battery system 201 of the present invention can in this way suppress frequency fluctuations and voltage fluctuations within the electrical power system 102.

[Layered structure of the battery system 201 in the present invention]

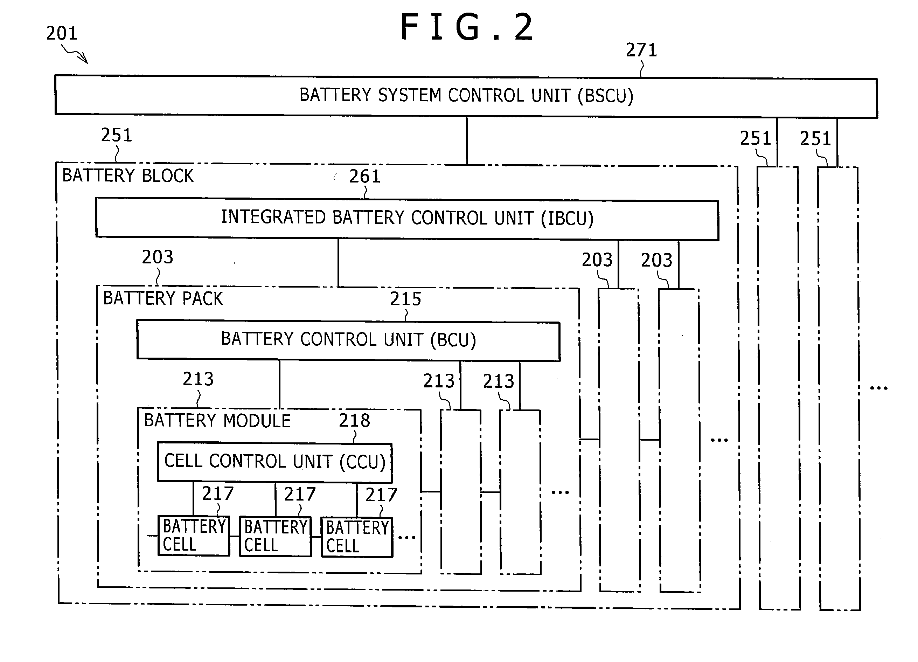

The layered structure of the battery system 201 of the present invention is described next while referring to Fig. 2. Fig. 2 is a block diagram for conceptually expressing the layered structure of the battery system 201 of the present invention.

The battery system 201 of the present invention as shown for example in Fig. 2 is comprised of a battery module 213 including multiple connected battery cells 217; a battery pack 203 including multiple connected battery modules 213; and a battery block 251 including multiple connected battery packs 203, in a mutually layered structure.

The battery module 213 includes: multiple serial connected battery cells 217, multiple parallel connected battery cells 217; and also multiple battery cells 217 connected in combinations of series and parallel connections. The battery pack 203 in the same way includes: multiple serial connected battery modules 213; multiple parallel connected battery modules 213 and also multiple battery modules 213 connected in combinations of series and parallel connections. The battery block 251 in the same way includes: multiple serial connected battery packs 203; multiple parallel connected battery packs 203; and also multiple battery packs 203 connected in combinations of series and parallel connections.

The battery module 213 as shown in Fig. 2 includes plural battery cells 217 and a cell control unit (CCU) 218. The battery cell 217 and battery module 213 are included within the "battery element" concept of the present invention.

Each of the plural battery cells 217 contains a function to temporarily charge a DC power supplied by way of the inverter 104 from the electrical power system 102 and also to discharge the DC power stored in the battery cells 217 as needed.

The cell control unit (CCU) 218 includes a function to measure the voltage across the terminals of each of the plural battery cells 217, temperature, and the electrical current, and acquire information relating to the state of charge (SOC) of each of the battery cells 217. The cell control unit 218 further includes a function to diagnose overcharging or over-discharging based on the voltage across the terminals of each of the plural battery cells 217.

The battery pack 203 includes multiple battery modules 213, and a battery control unit (BCU) 215 as shown in Fig. 2. The battery pack 203 is included within the "battery element" concept of the present invention.

Each of the plurality of battery modules 213 contains a function to temporarily charge the battery cell 217 with DC power supplied by way of the inverter 104 from the electrical power system 102, and also to discharge the DC power stored in the battery cells 217 as needed.

The battery control unit (BCU) 215 contains a function to report state of charge information on each of the plurality of battery cells 217 and monitoring information for the battery pack 203 acquired from the cell control unit 218 by way of a communication medium not shown in the drawing, to the integrated battery control unit (IBCU) 261 and the system control device (BSCU/battery system control unit) 271 functioning as its own upper-ranked control device by way of a communication medium not shown in the drawing.

The battery block 251 includes plural battery blocks 203, and an integrated battery control unit (IBCU) 261 as shown in Fig. 203. The battery block 251 is included within the "battery element" concept of the present invention.

Each of the plurality of battery packs 203, the same as with the battery cells 217 and battery module 213; contains a function for a temporary charge by DC power supplied by way of the inverter 104 from the electrical power system 102, and also to discharge DC power stored in the battery pack 203 as needed.

The integrated battery control unit (IBCU) 261 contains a function to report information acquired from the battery control unit (BCU) 215 and monitoring information for the battery block 251 by way of a communication medium, to the system control device (BSCU/battery system control unit) 271 functioning as its own upper-ranked control device by way of a communication medium. The system control device (BSCU/battery system control unit) 271 contains a function to monitor the operation of the plurality of battery blocks 251.

[Overview of battery system 201 of the present invention]

An overview of the battery system 201 of the present invention is described prior to describing the first and second embodiments of the present invention.

The battery system 201 of the present invention is a battery system connected to plural battery elements including a positive terminal and a negative terminal, and the system further includes multiple wires to respectively conduct electricity between a positive terminal on battery element on one side, and a negative terminal on a battery element on another side among a pair of battery elements that are objects for connection; and the plurality of wires respectively include a first current flow path and a second current flow path, and the first and second current flow path respectively positioned to maintain a roughly specified mutual gap, and the flow of electrical current on the first and the second electrical current path is set in mutually opposite directions which is the most important feature.

In the latter described first embodiment, the battery cell 217 is equivalent to the "battery element" of the present invention, and the battery module 213 is equivalent to the "battery system" of the present invention. Moreover in the latter described second embodiment, the battery module 213 is equivalent to the "battery element" of the present invention, and the battery pack 203 is equivalent to the "battery system" of the present invention.

The battery system 201 of the present invention is capable of achieving a compact and lightweight battery system to lessen the effect of the inductance component even in cases where the wire length connections between plural battery elements have become long.

[Battery module 213 equivalent to the battery system of the first embodiment of the present invention]

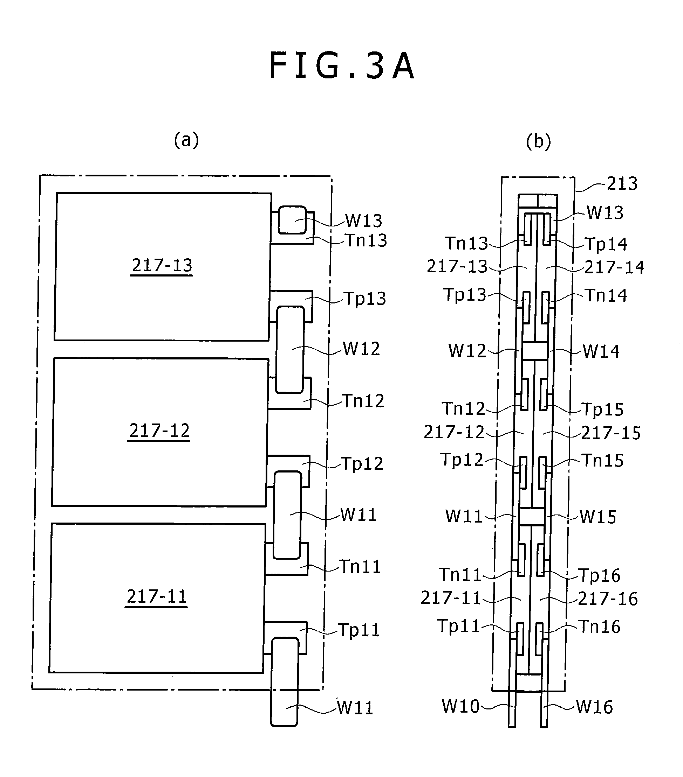

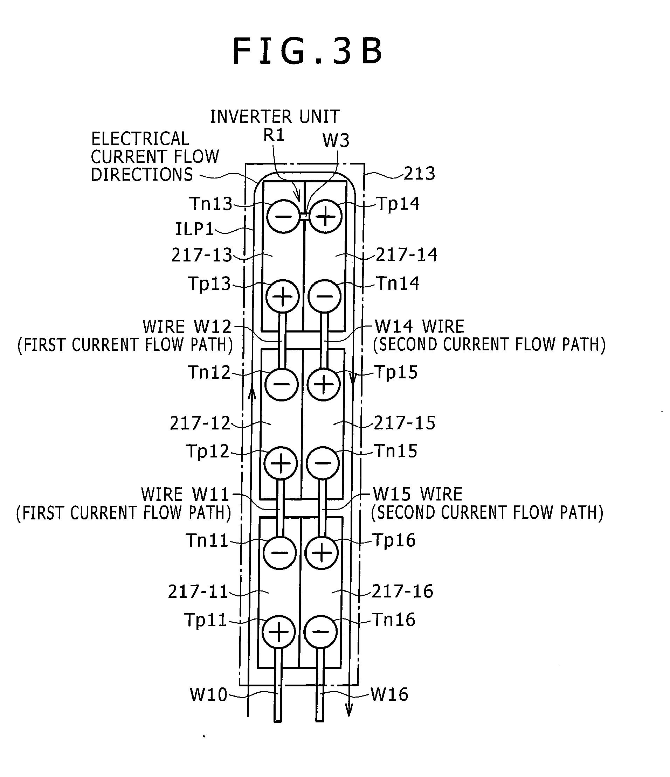

The battery module 213 equivalent to the battery system of the first embodiment of the present invention is described next while referring to Fig. 3A (a), (b) and Fig. 3B. Fig. 3A (a) is a drawing showing a transparent view from the side surface of an internal section of the battery module 213 equivalent to the battery system of the first embodiment of the present invention. Fig. 3A (b) is a drawing showing a transparent view from the backside of an internal section of the battery module 213. Fig. 3B is a wiring illustration for conceptually expressing the internal structure of the battery module 213.

Fig. 3A (b) and Fig. 3B are drawings showing the same object. Fig. 3B conceptually expresses the shape and structure of the positive terminals Tp11-16 and negative terminals Tn11-16 and the bus bars W10-W16.

The battery modules 213 equivalent to the battery system of the first embodiment of the present invention is comprised of multiple battery cells 217-11 through 16 formed into thin-profile cuboid shapes that are positioned arrayed for example in three lines and two rows and are connected between each of them as shown in Fig. 3A(a) and (b). Each of the plural battery cells 217-11 through 16 respectively includes the positive terminals Tp11 through 16 and the negative terminals Tn11 through 16.

Among the pair of battery cells 217-11 and 12 that are objects for connection, the bus bar W11 equivalent to the "wiring" of the present invention electrically connects between the positive terminal Tp12 of the battery cell 217-12 on one side, and the negative terminal Tn11 of the battery cell 217-11 on the other side. The bus bars W11 are made from a metal having good conduction such as copper (hereafter, the same).

Among the pair of battery cells 217-12 and 13 that are objects for connection, the bus bar W12 electrically connects between the positive terminal Tp13 of the battery cell 217-13, and the negative terminal Tn12 of the battery cell 217-12 on the other side.

Among the pair of battery cells 217-13 and 14 that are objects for connection, the bus bar W13 electrically connects between the positive terminal Tp14 of the battery cell 217-14 on one side, and the negative terminal Tn13 of the battery cell 217-13 on the other side.

The inverter unit R1 is comprised of the positive terminal Tp14, the negative terminal Tn13, and the bus bar W13 electrically connecting between these terminals.

Among the pair of battery cells 217-14 and 15 that are objects for connection, the bus bar W14 electrically connects between the positive terminal Tp15 of the battery cell 217-15 on one side, and the negative terminal Tn14 of the battery cell 217-14 on the other side.

Among the pair of battery cells 217-15 and 16 that are objects for connection, the bus bar W15 electrically connects between the positive terminal Tp16 of the battery cell 217-16 on one side, and the negative electrode terminal Tn15 of the battery cell 217-15 on the other side.

Further, the bus bar W10 electrically connecting to the positive terminal Tp11 of the battery cell 217- 11, is mounted as a bus bar electrically connecting to the positive terminal of the battery module 213 as shown in Fig. 3A (a) and (b) . Moreover, the bus bar W16 electrically connected to the negative terminal Tn16 of the battery cell 217- 16 is mounted as a bus bar electrically connecting to the negative terminal of the battery module 213.

Restated in other words, in the battery module 213 equivalent to the battery system of the first embodiment of the present invention, the bus bars W11, W12 (equivalent to the "first current flow path" of the present invention) electrically connected in series between the battery cells 217-11 through 13; and the bus bars W14, W15 (equivalent to the "second current flow path" of the present invention) electrically connected in series between the battery cells 217-14 through 16 are respectively mounted to maintain a roughly specified mutual gap as shown in Fig. 3B.

The bus bars W11, W12, and bus bars W14, W15 are preferably mounted in a single line and in mutual close proximity. This placement enhances the inductance component cancelling effect for the bus bars W11, W12, W14, and W15 as described in detail later on. The electrical current flow in the bus bars W11, W12, and the bus bars W14, W15 is set in mutually opposite directions, at an inverter unit R1 configured from a positive terminal Tp14, a negative terminal Tn13, and a bus bar W13 as shown in Fig. 3B.

[Effect rendered by battery module 213 equivalent to the battery system of the first embodiment of the present invention]

In the battery module 213 equivalent to the battery system of the first embodiment of the present invention, the bus bars W11, W12, and the bus bars W14, W15 are respectively mounted to maintain a roughly specified mutual gap; and the electrical current flow in the bus bars W11, W12, and bus bars W14, W15 is set to flow in mutually opposite directions.

Here, the equivalent inductance of the bus bars W11, W12 are respectively set as L11, L12, and the equivalent inductance of the bus bar W13 is set as L13; and the equivalent inductance of the bus bars W14, W15 are respectively set as L14, L15; and M11 expresses the mutual inductance between the bus bars W11 and W15; and M12 expresses the mutual inductance between the bus bars W12 and W14. The equivalent inductance (residual inductance) L1 [H] for a first current loop ILP1 arriving at the negative terminal Tn16 of battery cell 217- 16, from the positive terminal Tp11 of battery cell 217- 11 at this time is expressed by Formula (1) as follows:

$$L1 = L11 + L12 + L13 + L14 + L15 - M11 - M12 \quad \text{(Formula 1)}$$

In the formula (Formula 1) for calculating the equivalent inductance (residual inductance) of the first current loop ILP1, the negative (minus) polarity of the mutual inductances M11, M12 results from the mounting placement of the bus bars W11, W12 and the bus bars W14, W15 in the first current loop ILP1 that mutually cancels out the flux generated by each bus bar.

Therefore, compared to comparative examples where the present invention is not applied, the battery module 213 equivalent to the battery system of the first embodiment of the present invention is capable of reducing the equivalent inductance (residual inductance) L1 of the first current loop ILP1 by an amount equivalent to the mutual inductance (M11+M12) . Consequently, compared to the comparative example where the present invention is not utilized, the battery system 201 connecting to the inverter 104 utilizing a switching element not shown in the drawing, can utilize a small capacitance component as a condenser not shown in the drawing for eliminating effects from the inductance component occurring in the wiring.

The battery module 213 equivalent to the battery system of the first embodiment of the present invention is capable of providing a compact and lightweight power system 101 that reduces the effect of the inductance component L1 even in cases where the wire length connecting between the plural battery cells 217-11 through 16 has become long.

[Battery pack 203 equivalent to the battery system of the second embodiment of the present invention]

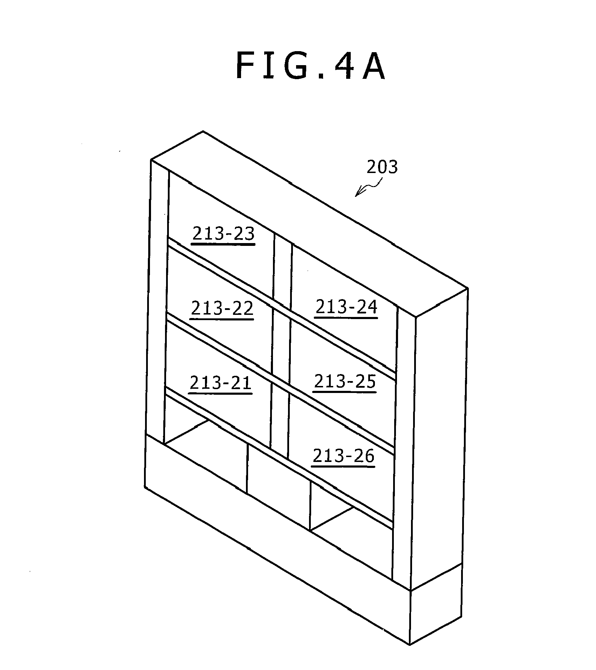

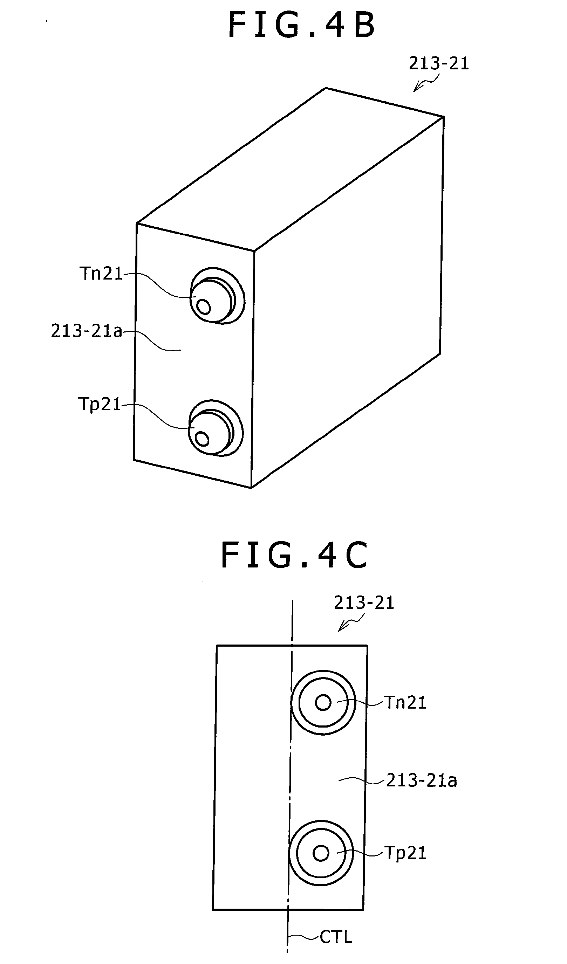

The battery pack 203 equivalent to the battery system of the second embodiment of the present invention is described next while referring to Fig. 4A through Fig. 4F. Fig. 4A is an external perspective view showing the battery pack 203 equivalent to the battery system of the second embodiment of the present invention. Fig. 4B is an external perspective view of the battery module 213 serving as a structural element of the battery pack 203. Fig. 4C is a frontal view of the battery module 213.

The battery pack 203 equivalent to the battery system of the second embodiment of the present invention is comprised of the plural battery modules 217-21 through 26 positioned for example arrayed in three lines and two rows and connected between each of them as shown in Fig. 4A. The plural battery modules 213-21 through 26 preferably employ the structure of a battery module 213 equivalent to the battery system of the first embodiment of the present invention. The present embodiment renders the effect of lowering the inductance component of the battery module 213 synergistically added to the inductance reducing effect of the battery pack 203 and so can provide the effect of a drastic drop in inductance.

The battery modules 213-21 (battery modules 213-22 through 26 are also the same structure) are formed in a cuboid shape as shown in Fig. 4B and Fig. 4C. The positive terminal Tp21 and the negative terminal Tn21 are respectively formed in a protrusive inverted bowl shape on the front plate 213-21a of the battery module 213-21. The positive terminal Tp21 and negative terminal Tn21 are formed offset to one side; longitudinally along the center line CTL of the front plate 213-21a.

The positive terminal Tp21 and the negative terminal Tn21 are formed offset to one side of the center line CTL of the front plate 213-21a in this way in order to interference between terminals. Namely, in the battery pack 203 equivalent to the battery system of the second embodiment of the present invention, each of the front plates 213-21a, 26a are mutually formed so as to face opposite each other between for example the pair of battery modules 213-21, 26 as described later on. Therefore, assuming the positive terminal Tp21 and the negative terminal Tn21 are formed along the center line CTL of the front plate 213-21a, the terminals installed on each of the front plates 213-21a, 26a will mutually interfere with one another.

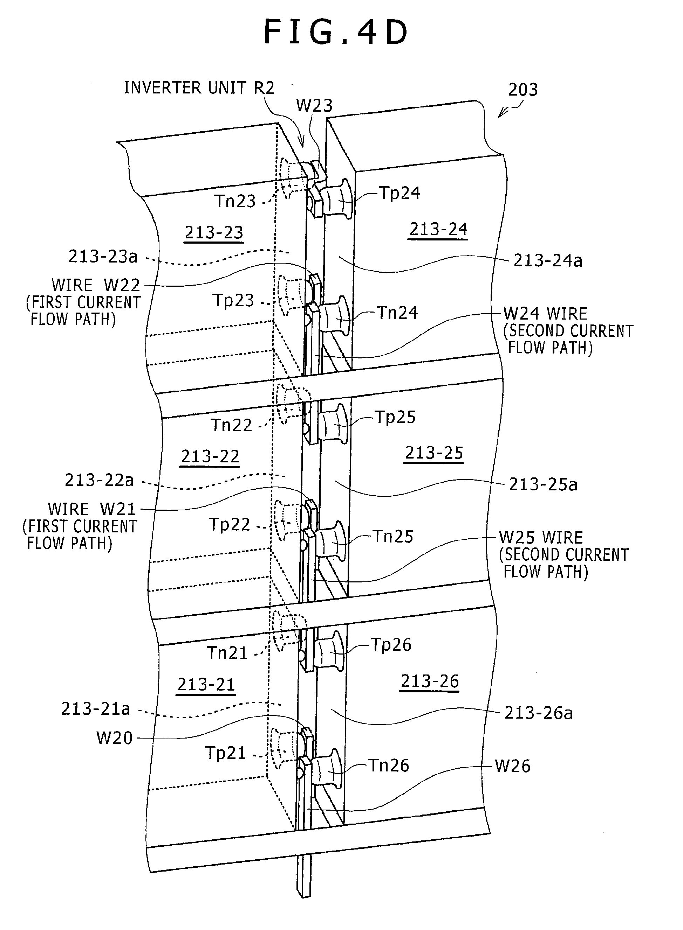

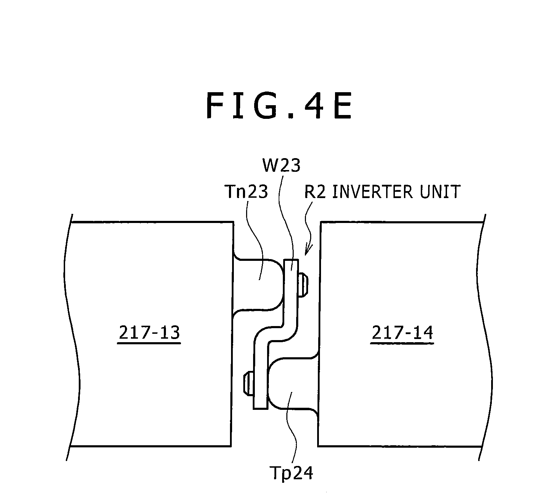

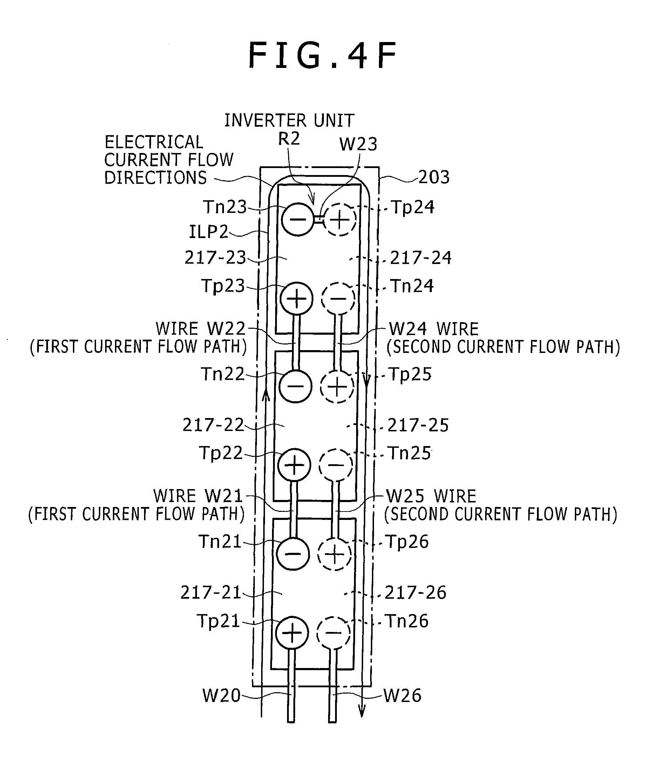

The structure of the battery pack 203 equivalent to the battery system of the second embodiment of the present invention is described next while referring to Fig. 4D through Fig. 4F utilizing an example where bus bars W20 through W26 equivalent to the "wiring" in this present invention, electrically connect to each of the six battery modules 213-21 through 26. Fig. 4D is an external perspective view showing the state where a pair of battery modules 213 is connected by way of wires the W21 through W23. Fig. 4E is a view as seen from above, showing the connection state between the pair of battery modules 213 in Fig. 4D. Fig. 4F is a wiring illustration for conceptually expressing the internal structure of the battery pack 203.

Each of the plural battery modules 213-21 through 26 as shown in Fig. 4D, includes the positive terminals Tp21 through 26 and the negative terminals Tn21 through 26 on the respective front plates 213-21a through 26a.

The battery module 213-2 and the battery module 213-26 are mounted with their front plates 213-21a, 26a facing opposite each other as shown in Fig. 4D. The battery module 213-26 is mounted inverted relative to the battery module 213-21. Mutual interference between terminals mounted on each of the front plates 213-21a, 26a can in this way be prevented.

The battery module 213-22 and the battery module 213-25 are mounted the same as before so that their own front plates 213-22a and 25a face opposite each other as shown in Fig. 4D. The battery module 213-25 is mounted inverted relative to the battery module 213-22. Interference between the terminals mounted on each of the front plates 213-22a, 25a can in this way be prevented.

The battery module 213-23 and the battery module 213-24 are mounted the same as before with their own front plates 213-23a, 24a facing opposite each other as shown in Fig. 4D. Moreover the battery module 213-24 is mounted inverted relative to the battery module 213-23. In this way interference between the terminals mounted on each of the front plates 213-23a, 24a can be prevented.

Among the pair of battery modules 213-21 and 22 that are objects for connection, the bus bar W21 equivalent to the "wiring" of the present invention electrically connects between the positive terminal Tp22 of the battery module 213-22 on one side, and the negative terminal Tn21 of the battery module 213-21 on the other side as shown in Fig. 4D. The bus bars W21 are made from a metal having good conduction such as copper (hereafter, the same).

Also, among the pair of battery modules 213- 22 and 23 that are objects for connection, the bus bar W22 electrically connects between the positive terminal Tp23 of the battery module 217- 23 on one side, and the negative terminal Tn22 of the battery module 213- 22 on the other side as shown in Fig. 4D.

Among the pair of battery modules 213-23 and 24 that are objects for connection, the crank-shaped bus bar W23 electrically connects between the positive terminal Tp24 of the battery module 213-24 on one side, and the negative terminal Tn23 of the battery module 213-23 on the other side as shown in Fig. 4D and Fig. 4E.

The inverter unit R2 is comprised of the positive terminal Tp24, the negative terminal Tn23, and the bus bar W23 electrically connecting between these terminals.

The crank-shaped bus bar W23 is used here when electrically connecting the pair of battery modules 213-23, 24 in order to narrow the gap that is between the pair of battery modules 213-23 and 24 and also to allow increasing the number of battery modules that can be installed per volumetric unit.

Among the pair of battery modules 213-24 and 25 that are objects for connection, the bus bar W24 electrically connects between the positive terminal Tp25 of the battery module 213-25 on one side, and the negative electrode terminal Tn24 of the battery module 213-24 on the other side as shown in Fig.4D.

Among the pair of battery modules 213-25 and 26 that are objects for connection, the bus bar W25 electrically connects between the positive terminal Tp26 of the battery module 213-26 on one side, and the negative electrode terminal Tn25 of the battery module 213-25 on the other side as shown in Fig.4D.

Further, the bus bar W20 electrically connecting to the positive terminal Tp21 of battery module 213- 21 is mounted as the bus bar electrically connects to the positive terminal of the battery pack 203 as shown in Fig. 4D and Fig. 4F. Also, the bus bar W26 electrically connecting to the negative terminal Tn26 of the battery module 213- 26 is mounted as a bus bar electrically connecting to the negative terminal of the battery pack 203.

In other words, in the battery pack 203 equivalent to the battery system of the second embodiment of the present invention, the bus bars W21, W22 (equivalent to the "first current flow path" in the present invention) electrically connected in series between the battery module 213-21 through 23; and the bus bars W24, W25 (equivalent to the "second current flow path" in the present invention electrically connected in series between the battery modules 213-24 through 26, are respectively mounted so as to maintain a roughly specified mutual gap between them as shown in Fig. 4F.

The bus bars W21, W22, and bus bars W24, W25 are preferably mounted in a single line and in mutual close proximity. The reason for mounting in this manner is that this placement enhances the inductance component cancelling effect on the bus bars W21, W22, W24, and W25. Moreover, the flow of electrical current of the bus bars W21 W22, and the bus bars W24, W25 are set in mutually opposite directions, at an inverter unit R2 configured from a positive terminal Tp24, a negative terminal Tn23, and a bus bar W23 as shown in Fig. 4F.

[Effect rendered by battery pack 203 equivalent to the battery system of the second embodiment of the present invention]

In the battery pack 203 equivalent to the battery system of the second embodiment of the present invention, the bus bars W21, W22, and the bus bars W24, W25 are respectively mounted to maintain roughly specified mutual gaps; and the flow of electrical current in the bus bars W21, W22, and bus bars W24, W25 is set to flow in mutually opposite directions.

Here, the equivalent inductance of the bus bars W21, W22 is respectively set as L21, L22, and the equivalent inductance of the bus bar W23 is set as L23; and the equivalent inductance of the bus bars W24, W25 are respectively set as L24, L25; and M21 expresses the mutual inductance between the bus bars W21, W25; and M22 expresses the mutual inductance between the bus bars W22, W24. The equivalent inductance (residual inductance) L2 [H] for a second current loop ILP2 arriving at the negative terminal Tn26 of battery module 213- 26, from the positive terminal Tp21 of battery module 213- 21 at this time is expressed by Formula (2) as follows:

```
L2 = L21 + L22 + L23 L24 + L25 - M21 - M22        (Formula 2)
```

In the formula (Formula 2) for calculating the equivalent inductance (residual inductance) of the second current loop ILP2, the negative (minus) polarity of the mutual inductances M21, M22 results from the mounting placement of the bus bars W21, W22 and the bus bars W24, W25 in the second current loop ILP2 that mutually cancels out the flux respectively generated by each bus bar.

Therefore, compared to the comparative example where the present invention is not applied, the battery pack 203 equivalent to the battery system of the second embodiment of the present invention is capable of reducing the equivalent inductance (residual inductance) L2 of the second current loop ILP2 by an amount equivalent to the mutual inductance (M21+M22) . Consequently, compared to the comparative example in which the present invention is not utilized, the battery system 201 connecting to the inverter 104 utilizing a switching element, can utilize a small capacitance component as a condenser for eliminating effects from the inductance component occurring in the wiring.

The battery pack 203 equivalent to the battery system of the second embodiment of the present invention is capable of providing a compact and lightweight power system 101 that reduces the effect of the inductance component L even in cases where the wire length connections between the plural battery modules 213-21 through 26 have become long.

The battery pack 203 equivalent to the battery system of the second embodiment of the present invention employs a structure of the battery module 213 equivalent to the battery system of the first embodiment of the present invention as the plural battery modules 213-21 through 26, and so can drastically reduce the effect from the inductance component by applying the inductance component reducing effect in battery module 213 synergistically added to the inductance component reducing effect in the battery pack 203.

[Other Embodiments]

The plural embodiments described above show working examples of the present invention. These working examples must therefore not be interpreted as restricting the technical range of the present invention. The present invention may be implemented in various forms that do not depart from the concept or the main features of the present invention.

For example, in the description of the battery module 213 equivalent to the battery system of the first embodiment, an example was described of a state where the bus bars W11, W12 equivalent to a "first current flow path" of the present invention, and the bus bars W14, W15 equivalent to a "second current flow path" of the present invention belong to a common first current loop ILP1, however the present invention is not limited to this example. The technical range of the present invention also includes a state where the bus bars equivalent to a "first current flow path" of the present invention, and the bus bars equivalent to a "second current flow path" of the present invention belong to mutually different current loops.

In the description of the battery pack 203 equivalent to the battery system of the second embodiment, an example was described of a state where the bus bars W21, W22 equivalent to the "first current flow path" of the present invention, and the bus bars W24, 25 equivalent to the "second current flow path" of the present invention belong to a common second current loop ILP2, however the present invention is not limited to this example. The technical range of the present invention also includes a state where the bus bars equivalent to a "first current flow path" of the present invention, and the bus bars equivalent to a "second current flow path" of the present invention belong to mutually different current loops.

In the description of the battery pack 203 equivalent to the battery system of the second embodiment, an example was described of a state where a structure of the battery module 213 equivalent to the battery system of the first embodiment of the present invention was employed as the plural battery modules 213-21 through 26 serving as structural elements of the battery pack 203, however the present invention is not limited to this example. The technical range of the present invention also includes a state where a structure of the battery module 213 for a comparative example not applicable to the present invention is employed as multiple battery modules 213-21 through 26 serving as the structural elements of the battery pack 203.

In the description of a battery module 213 equivalent to the battery system of the first embodiment, an example of a state where plural battery cells 217-11 through 16 were arrayed in three lines and two rows was described, however the present invention is not limited to this example. The plural battery cells may be set in an optional quantity changeable as needed as a quantity in the line direction, and a quantity in the row direction.

In the description of the battery pack 203 equivalent to the battery system of the second embodiment, an example of a state where plural battery modules 213-21 through 26 were arrayed in three lines and two rows was described, however the present invention is not limited to this example. The plural battery cells may be set in an optional quantity changeable as needed as a quantity in the line direction, and a quantity in the row direction.

Features, components and specific details of the structures of the above- described embodiments may be exchanged or combined to form further embodiments optimized for the respective application. As far as those modifications are apparent for an expert skilled in the art they shall be disclosed implicitly by the above description without specifying explicitly every possible combination.

**Claims**

1. A battery system including a plurality of connected battery elements (217) containing a positive terminal (Tp11, Tp12, Tp13) and a negative terminal (Tn11, Tn12, Tn13), wherein:

   the battery system (201) further comprising a plurality of wires (W11, W12, W13) to electrically connect between a positive terminal (Tp11, Tp12, Tp13) of the battery element on one side, and a negative terminal (Tn11, Tn12, Tn13) of a battery element (217) on the other side among a pair of battery elements (217) as objects for connection,
   the plurality of wires (W11, W12, W13) respectively include a first current flow path and a second current flow path,
   the first and second current flow paths are respectively arranged to maintain a specified mutual gap, and
   the current flow on the first and the second current flow paths are set in mutually opposite directions.

2. The battery system according to claim 1,
   wherein the first and the second current flow paths are formed in a single line and in mutual close proximity.

3. The battery system according to claim 1 or claim 2,
   wherein the wiring further includes an inverter unit (R1, R2) to invert the current flow direction in the applicable wiring formed between the first and the second current flow paths.

4. The battery system according to any one of claims 1 through 3, wherein the battery element (217) is a battery cell (217-11, 217-12, 217-13).

5. The battery system according to any one of claims 1 through 3, wherein the battery element (217) is a battery module (213) including the battery cells (217-11, 217-12, 217-13) connected in series.

6. The battery system according to any one of claims 1 through 3, wherein the battery element (217) is a battery cell (217-11, 217-12, 217-13), a battery module (213) including the battery cells (217-11, 217-12, 217-13) connected in series.

# F I G . 1

101

103

POWER GENERATOR
UNIT

{ WIND POWER
GENERATOR,
HYDRAULIC
GENERATOR,
SOLAR
GENERATOR,
OTHERS }

A          105          102

104

INVERTER

201

BATTERY
SYSTEM

# FIG.2

BATTERY SYSTEM CONTROL UNIT (BSCU) — 271

251 — BATTERY BLOCK

261 — INTEGRATED BATTERY CONTROL UNIT (IBCU)

203 — BATTERY PACK

215 — BATTERY CONTROL UNIT (BCU)

213 — BATTERY MODULE

218 — CELL CONTROL UNIT (CCU)

217 — BATTERY CELL

201

EP 2 639 858 A1

EP 2 639 858 A1

# FIG.3A

(a)

(b)

12

# FIG. 3B

INVERTER UNIT

ELECTRICAL
CURRENT FLOW
DIRECTIONS

R1     W3

Tn13

ILP1

217-13

Tp13

WIRE W12
(FIRST CURRENT FLOW PATH)

Tn12

217-12

Tp12

WIRE W11
(FIRST CURRENT FLOW PATH)

Tn11

217-11

Tp11

W10

213

Tp14

217-14

Tn14

W14 WIRE
(SECOND CURRENT FLOW PATH)

Tp15

217-15

Tn15

W15 WIRE
(SECOND CURRENT FLOW PATH)

Tp16

217-16

Tn16

W16

# FIG.4A

203

213-23

213-22　　213-24

213-21　　213-25

213-26

# FIG. 4B

213-21

Tn21

213-21a

Tp21

# FIG. 4C

213-21

Tn21

213-21a

Tp21

CTL

# FIG.4D

INVERTER UNIT R2

W23

203

Tn23

Tp24

213-23

213-24

213-23a

213-24a

WIRE W22
(FIRST CURRENT
FLOW PATH)

Tp23

Tn24

W24 WIRE
(SECOND CURRENT
FLOW PATH)

Tn22

Tp25

213-22

213-25

213-22a

213-25a

WIRE W21
(FIRST CURRENT
FLOW PATH)

Tp22

Tn25

W25 WIRE
(SECOND CURRENT
FLOW PATH)

Tn21

Tp26

213-21

213-26

213-21a

213-26a

W20

Tp21

Tn26

W26

# FIG.4E

W23

Tn23   R2 INVERTER UNIT

217-13

217-14

Tp24

# FIG.4F

INVERTER UNIT

ELECTRICAL
CURRENT FLOW
DIRECTIONS

R2   W23

Tn23 — ⊖    (⊕) — Tp24
ILP2
217-23 — 203
Tp23 — ⊕    (⊖) — Tn24
217-24
Tn24

WIRE W22
(FIRST CURRENT FLOW PATH)

W24 WIRE
(SECOND CURRENT FLOW PATH)

Tn22 — ⊖    (⊕) — Tp25

217-22 — 217-25

Tp22 — ⊕    (⊖) — Tn25

WIRE W21
(FIRST CURRENT FLOW PATH)

W25 WIRE
(SECOND CURRENT FLOW PATH)

Tn21 — ⊖    (⊕) — Tp26

217-21 — 217-26

Tp21 — ⊕    (⊖) — Tn26

W20 — W26

Europäisches Patentamt
European Patent Office
Office européen des brevets

**EUROPEAN SEARCH REPORT**

Application Number

EP 13 15 6266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 307 151 B1 (ROBERSON DAVID L [US]) 23 October 2001 (2001-10-23) * column 3, line 9 - column 4, line 35; figure 2 * | 1-6 | INV. H01M2/20 |
| X,P | WO 2012/089394 A1 (BOSCH GMBH ROBERT [DE]; KESSLER MARTIN [DE]; FEUERSTACK PETER [DE]; WE) 5 July 2012 (2012-07-05) * the whole document * | 1-6 | |

TECHNICAL FIELDS SEARCHED (IPC)

H01M

The present search report has been drawn up for all claims

| Place of search | Date of completion of the search | Examiner |
|---|---|---|
| Munich | 16 May 2013 | Cappadonia, Marcella |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 13 15 6266

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2013

| Patent document cited in search report | | | Publication date | Patent family member(s) | | Publication date |
|---|---|---|---|---|---|---|
| US 6307151 | B1 | | 23-10-2001 | NONE | | |
| WO 2012089394 | A1 | | 05-07-2012 | DE 102010064303 A1 | | 05-07-2012 |
| | | | | WO 2012089394 A1 | | 05-07-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010092841 A